# EUROPEAN PATENT SPECIFICATION

(11) **EP 1 157 730 B1**
(45) Date of publication and mention of the grant of the patent: **09.02.2005**
(21) Application number: 01850095.9
(22) Date of filing: 22.05.2001
(51) Int. Cl.: B01D 53/02, B01D 53/86, B01D 53/94

(54) **Ambient air purification device installed in an engine compartment of a motor vehicle.**
Aussenluftreinigungsvorrichtung installiert im Motorraum eines Fahrzeuges
Dispositif d'épuration de l'air ambiant installé dans le compartiment moteur d'un véhicule automobile

(30) Priority: 23.05.2000 SE 0001920
(43) Date of publication of application: 28.11.2001
(73) Proprietor: Volvo Car Corporation, 405 31 Göteborg (SE)
(72) Inventor: Karlsson, Jan, 421 66 Västra Frölunda (SE)
(74) Representative: Hammar, Ernst

(56) References cited:
- DE-C- 4 318 738
- US-A- 5 509 853
- PATENT ABSTRACTS OF JAPAN vol. 017, no. 106 (M-1375), 4 March 1993 (1993-03-04) & JP 04 297341 A (NAGATOSHI SUZUKI), 21 October 1992 (1992-10-21)

## Description

Engine compartment installation, comprising an internal combustion engine, a hydrocarbon-absorbing element and a heating device for heating and desorbing of hydrocarbon from the hydrocarbon-absorbing element, said engine having an intake air conduit, which opens to an intake manifold, and an exhaust manifold which opens to an exhaust conduit.

The development of new engines for vehicles has been directed for quite some time to increasing the engine efficiency in order to, inter alia, reduce the amount of exhaust and the damaging effects to the environment concomitant therewith. Catalytic converters are generally used to reduce the percentage of damaging substances in vehicle exhaust. It is also known in this context to use a hydrocarbon absorbent, e.g. a zeolite, between the exhaust manifold and the catalytic converter to take care of the hydrocarbons before the catalytic converter has become sufficiently hot. Combined electric and internal combustion engines, so-called hybrid engines, have come into a commercial use to reduce the amount of exhaust released from the engines.

Lately, however, methods have been developed to clean the air already polluted by other vehicles (DE 43 18 738 C1), e.g. by breaking down the toxic ozone close to the ground, which is formed by photosynthesis of hydrocarbons and nitrogen oxides, i.e. the smog formed when these substances from vehicle exhaust are subjected to sunlight. In a known method, a catalytic coating is sprayed onto the radiator flanges and pipes of the vehicle. When the ozone comes into contact with the heated catalytic converter coating, it is transformed into oxygen.

The present invention intends to achieve an engine installation which makes it possible to remove additional toxic substances, viz. existing hydrocarbons, for example, from other vehicles from the ambient air.

This is achieved according to the invention by virtue of the fact that a hydrocarbon-absorbing element and a heating device, are so arranged in the engine compartment relative to each other that a portion of the hydrocarbon-absorbing element is exposed to the surrounding engine compartment to enable hydrocarbon-absorbtion from the ambient air when another portion of the element is exposed to the heating device for desorbing hydrocarbon previously absorbed by said hydrocarbon-absorbing element, that the hydrocarbon-absorbing element is disposed to be movable so that a portion of the element is moved to the heating device at the same time as another portion is moved away from the heating device, and that means (14) are provided to conduct desorbed hydrocarbon to combustion means.

The hydrocarbon-absorbing device can be a zeolite with a honeycomb structure or an active carbon filter, which absorbs the hydrocarbons in the ambient air. Such a device will, after a certain period, become saturated with hydrocarbons and must be regenerated, i.e. the absorbed hydrocarbon must be removed. This is done by heating, desorbing the hydrocarbons, whereafter they are sucked into the engine combustion chambers and combusted. The hydrocarbon-absorbing element can be a disc rotatable by the engine, which is rotated stepwise, e.g. every ten minutes, so that a new sector of the disc is rotated into the heating device and is regenerated, while the rest of the disc is exposed to the ambient air flowing into the engine compartment.

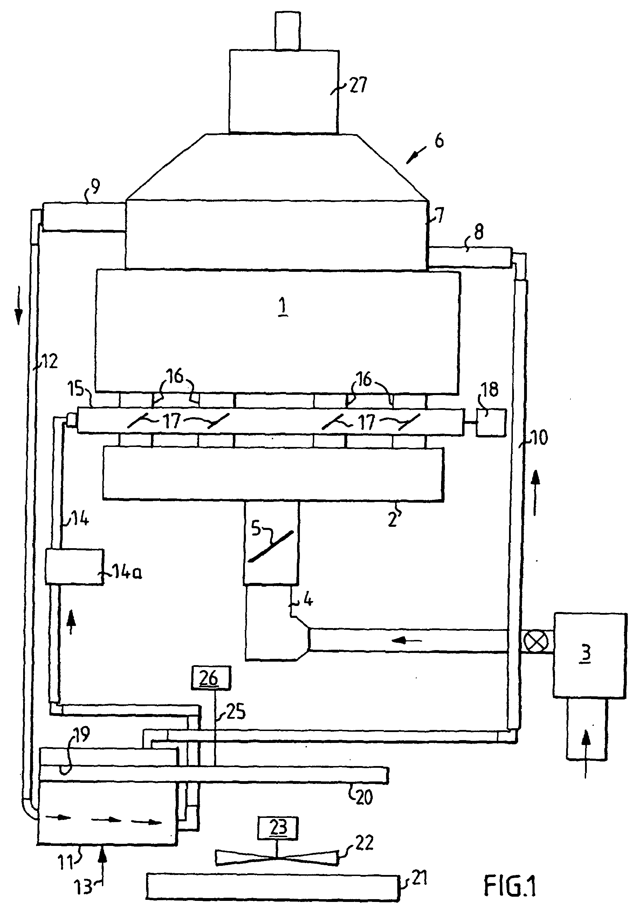

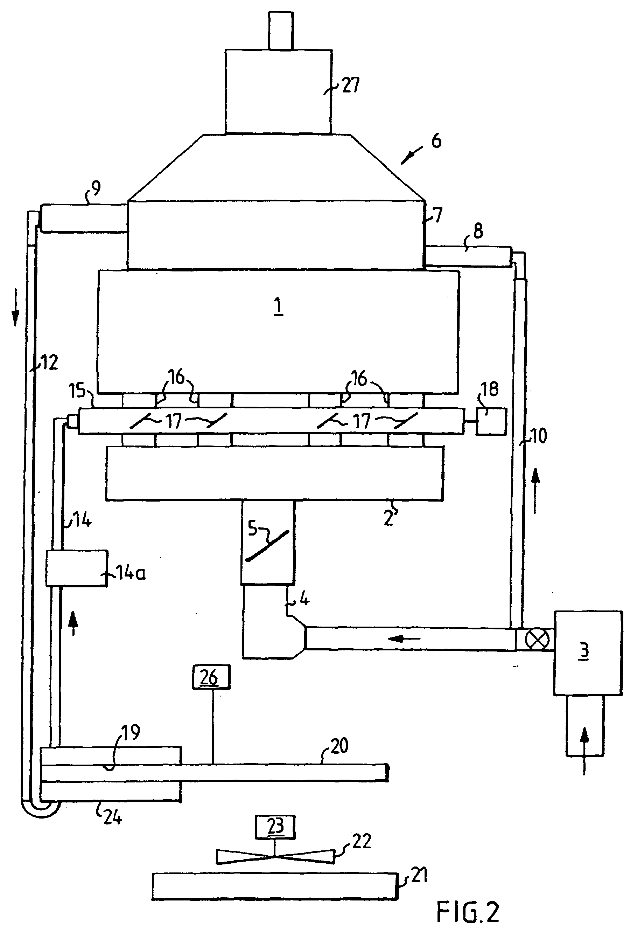

The invention will be described in more detail below with reference to examples shown in the accompanying drawings, where Figure 1 shows a schematic representation of a first embodiment of an engine installation according to the invention and Figure 2 shows a corresponding schematic representation of a second embodiment of an engine installation according to the invention.

In Figure 1, 1 designates a four-cylinder internal combustion engine with an intake manifold 2, an intake air filter 3 and an intake air conduit 4, containing a throttle 5. An exhaust manifold 6 has exhaust manifold conduits (not shown) surrounded by an outer cover 7, which has an inlet 8 and an outlet 9 for air. The exhaust manifold 6 opens into a catalytic converter 27. The inlet 8 communicates via a conduit 10 with one side of a heat exchanger 11, while the outlet 9 communicates with the other side of the heat exchanger 11 via a conduit 12. Cold ambient air is sucked into the heat exchanger 11 at the arrow 13 and flows via the conduit 10 to a space, which is defined between the outsides of the exhaust manifold pipes and the cover 7. The air heated by the exhaust manifold 6 flows to the heat exchanger 11, which is heated, and on through an outlet conduit 14 with an air filter 14a to a pipe 15, which communicates with the inlets to each of the branch pipes 16 of the intake manifold 2. In each inlet there is a throttle 17, which is controlled by a step motor 18 to control the flow of heated air to the combustion chambers of the engine.

The heat exchanger 11 is two-part with a gap 19 between the parts. The gap 19 has a width corresponding to the width of a circular disc-shaped porous element 20, which can absorb hydrocarbons, e.g. a zeolite or an active carbon filter. The heat exchanger 11 is placed, in the example shown, behind (or alternatively in front of) and to one side of the engine radiator 21 in the engine compartment, so that the major portion of the element 20 outside the heat exchanger is exposed to the radiator 21. Between the radiator 21 and the element 20 there is the engine cooling fan 22 with its motor 23.

The element 20 is fixed on a shaft 25 of a step motor 26, which turns the element 20 a certain angle after a certain period, e.g. one quarter turn every ten minutes. The heat exchanger is in this case dimensioned so that it can heat a fourth of the element 20 at a time. Instead of a rotating disc 20, a number of plates fixed to a chain convayor can be used, the plates moving past the radiator and preferably being dimensioned so that they overlap the entire surface of the radiator.

The segment of the element 20 in the heat exchanger gap 19 is heated by the heat exchanger 11, which has a temperature of circa 150°C, whereupon the hydrocarbons absorbed by the element 20 from the air flowing through the radiator 21 are desorbed and brought by the air flowing through into the conduit 14 and into the intake manifold 2 of the engine.

The embodiment in Figure 2 differs from that described above in that the heat exchanger 11 has been replaced by a heating device 24, which is not a heat exchanger through which air heated by the exhaust manifold 6, flows directly into the engine intake manifold 2. This contrasts with the heat exchanger 11 in Figure 1 through which the air flowing in at the arrow 13 is conducted two times through the heat exchanger before it is conducted into the engine. In the embodiment of Figure 2, the inlet conduit 10 is connected to the engine intake conduit 4 directly after the air filter 3.

The regeneration of the hydrocarbon-absorbing device 20 takes place at low load, which is the predominant operating state for common passenger cars with subatmospheric pressure in the intake pipe downstream of the throttle 5. At high load (acceleration) the throttles 17 are closed by the step motor 18 to prevent poorer response by mixing in heated air in the intake air. By arranging a pipe 15 with separate throttles 17 to each of the intake branch conduits 16, the supply of heated air can be rapidly throttled and the heating of adjacent portions of the engine is limited. In an alternative embodiment, the throttles can be individually controllable, for example, to utilize the suction pulses in the various intake pipes 16.

Tests have shown that merely supply of hot air to the intake air in the manner described at low load can reduce fuel consumption by approximately 3%. The supply of hydrocarbons to the intake air as the hydrocarbon absorbent is regenerated, provides additional energy on the order of 0.05-0.1%.

The invention has been described above with reference to embodiments in which the hydrocarbon absorbent is heated by air which has been heated by the exhaust, i.e. the heating is done indirectly by the exhaust, but it is also possible within the scope of the invention as claimed to, at least in certain applications, use the exhaust for direct heating and transport of the evaporated hydrocarbons to the intake manifold of the engine, a type of EGR.

## Claims

1. Engine compartment arrangement, comprising an internal combustion engine (1), a hydrocarbon-absorbing element and a heating device for heating and desorbing of hydrocarbon from the hydrocarbon-absorbing element, said engine having an intake air conduit (4), which opens to an intake manifold (2), and an exhaust manifold (6) which opens to an exhaust conduit, **characterized in that** the hydrocarbon-absorbing element (20) and a heating device (11; 24) are so arranged in the engine compartment relative to each other that a portion of the hydrocarbon-absorbing element is exposed to the surrounding engine compartment to enable hydrocarbon-absorbtion from the ambient air when another portion of the element is exposed to the heating device for desorbing hydrocarbon previsously absorbed by said hydrocarbon-absorbing element, that the hydrocarbon-absorbing element is disposed to be movable so that a portion of the element is moved to the heating device at the same time as another portion is moved away from the heating device, and that means (14) are provided to conduct desorbed hydrocarbon to combustion means.

2. Engine compartment arrangement according to Claim 1, **characterized in that** the heating device (11; 24) is an element heated by the engine exhaust.

3. Engine compartment arrangement according to Claim 2, **characterized in that** the exhaust manifold (6) forms heating elements in a container (7) through which ambient air flows, said container communicating with an inlet to the heating device (11; 24), and that the heating device has an outlet which communicates with the intake manifold (2).

4. Engine compartment arrangement according to Claim 3, **characterized in that** the heating device (11; 24) has an inlet to each of the branch conduits (16) of the intake manifold, downstream of the throttle (5) of the intake conduit (4), and that each of the inlets from the heating device contains a throttle (17) for controlling air supply from the heating device.

5. Engine compartment arrangement according to one of Claims 1-4, **characterized in that** the hydrocarbon-absorbing element (20) has a portion exposed to a radiator (21) in the engine compartment, when another portion is exposed to the heating device (11; 24).

6. Engine compartment arrangement according to one of Claims 1-5, **characterized** i**n that** the hydrocarbon-absorbing element (20) is a disc element rotatable by a motor.

## Patentansprüche

1. Motorraumanordnung, umfassend einen Verbrennungsmotor (1), ein Kolenwasserstoffabsorptionselement und eine Heizvorrichtung zum Erwärmen und Desorbieren von Kohlenwasserstoff aus dem Kohlenwasserstoffabsorptionselement, wobei der Motor eine sich zu einer Einlassbrücke (2) öffnende Einlassluftleitung (4) und eine sich zu einer Abgasleitung öffnende Abgasbrücke (6) aufweist, **dadurch gekennzeichnet, dass** das Kohlenwasserstoffabsorptionselement (20) und eine Heizvorrichtung (11; 24) relativ zueinander in dem Motorraum derart angeordnet sind, dass ein Bereich des Kohlenwasserstoffabsorptionselements dem umgebenden Motorraum ausgesetzt ist, um Kohlenwasserstoffabsorption aus der Umgebungsluft zu ermöglichen, wenn ein weiterer Bereich des Elements der Heizvorrichtung ausgesetzt ist, um zuvor von dem Kohlenwasserstoffabsorptionselement absobierten Kohlenwasserstoff zu desorbieren, dass das Kohlenwasserstoffabsorptionselement derart bewegbar angeordnet ist, dass ein Bereich des Elements zur Heizvorrichtung bewegt wird, während gleichzeitig ein weiterer Bereich von der Heizvorrichtung weg bewegt wird, und dass Einrichtungen (14) vorgesehen sind, um desorbierten Kohlenwasserstoff zu einer Verbrennungseinrichtung zu leiten.

2. Motorraumanordnung nach Anspruch 1, **dadurch gekennzeichnet, dass** die Heizvorrichtung (11; 24) ein vom Motorabgas erwärmtes Element ist.

3. Motorraumanordnung nach Anspruch 2, **dadurch gekennzeichnet, dass** die Abgasbrücke (6) Heizelemente in einem Behälter (7) bildet, durch den Umgebungsluft strömt und der mit einem Einlass zur Heizvorrichtung (11; 24) kommuniziert, und dass die Heizvorrichtung einen Auslass aufweist, der mit der Einlassbrücke (2) kommuniziert.

4. Motorraumanordnung nach Anspruch 3, **dadurch gekennzeichnet, dass** die Heizvorrichtung (11; 24) einen Einlass zu jeder der Verzweigungsleitungen (16) der Einlassbrücke stromabwärts der Drossel (5) der Einlassleitung (4) aufweist, und dass jeder der Einlässe von der Heizvorrichtung eine Drossel (17) zum Steuern der Luftzufuhr von der Heizvorrichtung enthält.

5. Motorraumanordnung nach einem der Ansprüche 1 bis 4, **dadurch gekennzeichnet, dass** das Kohlenwasserstoffabsorptionselement (20) einen einem Kühler (21) in dem Motorraum ausgesetzten Bereich aufweist, wenn ein weiterer Bereich der Heizvorrichtung (11; 24) ausgesetzt ist.

6. Motorraumanordnung nach einem der Ansprüche 1 bis 5, **dadurch gekennzeichnet, dass** das Kohlenwasserstoffabsorptionselement (20) ein durch einen Motor drehbares Scheibenelement ist.

## Revendications

1. Un arrangement de compartiment moteur, comportant un moteur à combustion interne (1) un élément d'absorption d'hydrocarbure et un dispositif de chauffage pour le chauffage et la désorption de l'hydrocarbure provenant de l'élément d'absorption d'hydrocarbure, ledit moteur ayant un conduit d'air d'admission (4), qui débouche dans un collecteur d'admission (2), et un collecteur d'échappement (6) qui débouche dans un conduit d'échappement, **caractérisé en ce que** l'élément d'absorption d'hydrocarbure (20) et un dispositif de chauffage (11; 24) sont aménagés l'un par rapport à l'autre dans le compartiment moteur de sorte que'une portion de l'élément d'absorption d'hydrocarbure est exposée au compartiment moteur qui l'entoure afin de permettre l'absorption d'hydrocarbure provenant de l'air ambiant alors qu'une autre portion de l'élément est exposée au dispositif de chauffage afin de désorber l'hydrocarbure absorbé au préalable par l'élément d'absorption d'hydrocarbure, **en ce que** l'élément d'absorption d'hydrocarbure est disposé afin d'être déplaçable de sorte qu'une portion de l'élément est déplacée vers le dispositif de chauffage en même temps qu'une autre portion est déplacée à l'écart du dispositif de chauffage, et **en ce que** des moyens (14) sont fournis pour guider l'hydrocarbure désorbé vers des moyens de combustion.

2. Un arrangement de compartiment moteur selon la revendication 1, **caractérisé en ce que** le dispositif de chauffage (11; 24) est un élément chauffé par les gaz d'échappement du moteur.

3. Un arrangement de compartiment moteur selon la revendication 2, **caractérisé en ce que** le collecteur d'échappement (6) forme des éléments de chauffage dans un réservoir (7) au travers duquel circule l'air ambiant, ledit réservoir communiquant avec une entrée vers le dispositif de chauffage (11; 24), et **en ce que** le dispositif de chauffage possède une sortie qui communique avec le collecteur d'admission (2).

4. Un arrangement de compartiment moteur selon la revendication 3, **caractérisé en ce que** le dispositif de chauffage (11; 24) possède une entrée vers chacun des conduits secondaires (16) du collecteur d'admission, en aval du papillon des gaz (5) du conduit d'admission (4), et **en ce que** chacune des entrées provenant du dispositif de chauffage contient un papillon des gaz (17) pour régulariser l'alimentation en air provenant du dispositif de chauffage.

5. Un arrangement de compartiment moteur selon l'une des revendications 1 à 4, **caractérisé en ce que** l'élément d'absorption d'hydrocarbure (20) possède une portion exposée au radiateur (21) dans le compartiment moteur, tandis qu'une autre portion est exposée au dispositif de chauffage (11; 24).

6. Un arrangement de compartiment moteur selon l'une des revendications 1 à 5, **caractérisé en ce que** l'élément d'absorption d'hydrocarbure (20) est un élément à disque tournant à l'aide d'un moteur.
